# EUROPÄISCHE PATENTSCHRIFT

(11) **EP 1 815 571 B1**
(45) Veröffentlichungstag und Bekanntmachung des Hinweises auf die Patenterteilung: **29.03.2017**
(21) Anmeldenummer: 05787132.9
(22) Anmeldetag: 31.08.2005
(51) Int. Cl.: H02B 1/056

(54) **SCHALTEINRICHTUNG MIT STECKKONTAKTIERBAREM SCHALTGERÄT**
SWITCHING SYSTEM COMPRISING SWITCHGEAR THAT CAN BE CONTACTED VIA PIN CONTACTS
CIRCUIT A APPAREIL DE COMMUTATION POUVANT ETRE MIS EN CONTACT PAR DES FICHES

(30) Priorität: 08.09.2004 DE 102004043470
(43) Veröffentlichungstag der Anmeldung: 08.08.2007
(73) Patentinhaber: Siemens Aktiengesellschaft, 80333 München (DE)
(72) Erfinder: ADUNKA, Robert, 92237 Sulzbach-Rosenberg (DE); BOLLINGER, Georg, 92447 Schwarzhofen (DE); DREXLER, Johann, 92421 Schwandorf (DE); HELDMANN, Berthold, 92272 Freudenberg (DE); MAYER, Eugen, 92237 Sulzbach-Rosenberg (DE)
(86) Internationale Anmeldenummer: PCT/EP2005/054265
(87) Internationale Veröffentlichungsnummer: WO 2006/027326

(56) Entgegenhaltungen:
- DE-A1- 2 634 199
- DE-A1- 3 011 184
- DE-C1- 10 204 226

## Beschreibung

Die Erfindung bezieht sich auf eine Schalteinrichtung mit einem Schaltgerät, das mindestens eine Hauptstrombahn mit einem Schaltelement und Anschlüsse zur Zuführung des Stroms in die Hauptstrombahn und zur Weiterleitung des Stroms der Hauptstrombahn zu einem Verbraucher aufweist.

Derartige Schalteinrichtungen werden in einem Verbraucherabzweig eingesetzt, wie er aus der EP 1 029 390 bekannt ist. Ein solcher Verbraucherabzweig ist aus einem Schütz und einem Leistungsschalter zusammengesetzt. Die EP 1 029 390 offenbart eine Abzweig-Baugruppe mit einem Zwischenträger, auf dem das Schütz und der Leistungsschalter montiert sind. Der Zwischenträger ist mit einem Kanal versehen, in dem Steckkontakte liegen, die über elektrische Leitungen mit der Abzweig-Baugruppe zur Zuführung des Stroms verbunden sind.

Die DE 26 34 199 A1 offenbart eine Schaltgeräteeinheit mit in einer Wand eines druckfesten Gehäuses angeordneten Leitungsdurchführungen und einem Trennschalter, der zwischen die einspeisenden Leitungen und die den Verbraucherstromkreisen zugeordneten Schaltgeräte geschaltet ist. Zur Bereitstellung einer lösbaren Steckvorrichtung ist ein Mittel zur Kraftübertragung in Gestalt eines Hebels vorgesehen, durch dessen Betätigung ein Aufschieben des Trennschalters auf Stromschienen ermögleicht wird. Bei der Betätigung des Hebels wird durch dessen Lagerung eine Rotationsbewegung des Trennschalters ausgeführt.

Die DE 30 11 184 A1 offenbart eine Baueinheit mit einem elektrischen Schalter und einem Steckhülsengehäuse, die beide mit Hilfe von Rastelementen an einem Aufnahmeteil montierbar sind, das zumindest den Schalter weitgehend umgibt. Als Mittel zur Kraftübertragung auf den Schalter wird ein federndes Element bzw. ein durch ein Werkzeug betätigbares Demontageteil vorgeschlagen, wobei das Demontageteil durch die Ausbildung eines Hebels eine Kraft auf das Schaltelement bei Betätigung übertragen kann.

Die DE 102 04 226 C1 offenbart einen Geräteeinschub für eine Schaltanlage, bei dem durch eine Handkurbel ein Lösen von Steckkontakten zu ortsfesten Gegensteckkontakten realisiert werden kann.

Der Erfindung liegt die Aufgabe zugrunde, eine Schalteinrichtung der oben genannten Art zu schaffen, bei der das Schaltgerät in einfacher Weise über seine Anschlüsse kontaktierbar und dekontaktierbar ist. Dies soll auch unter beengten Platzverhältnissen möglich sein, d.h., wenn das Schaltgerät dicht benachbart zu weiteren Schaltgeräten angeordnet ist.

Diese Aufgabe wird mit den Merkmalen nach Anspruch 1 gelöst.

Dabei wird durch die außenseitig zugänglichen, senkrecht zur Rückwand des Gehäuses steckbaren Steckkontakte die Kontaktierung auch unter beengten Platzverhältnissen erleichtert. Zusätzliche Mittel zur Kraftübertragung auf das Schaltgerät oder auf die Gegensteckkontakte ermöglichen die Aufhebung der Kontaktierung in einfacher Weise.

Hierzu ist ein bewegliches Befestigungselement an einem Träger vorgesehen, das zur Befestigung des Schaltgeräts dient, wozu das bewegliche Befestigungsmittel an mindestens einer Kontur des Schaltgeräts oder der Halterungseinrichtung eingreift, wobei das bewegliche Befestigungsmittel als Schieber ausgeführt ist. Diese Ausführungsform ermöglicht eine einfache Montage des Schaltgeräts durch Aufsetzen in der zur Rückwand senkrechtten Richtung.

Vorteilhafte Weiterbildungen der Erfindung sind den Unteransprüchen zu entnehmen.

Verfügt das bewegliche Befestigungselement über mindestens eine Kante oder Ausrückfläche, über die das Schaltgerät durch eine Bewegung des Befestigungselements ausrückbar ist, ist hiermit die einfache Lösung des Schaltgerät von dem Befestigungselement möglich.

Die Ausführung gemäß Anspruch 5 bietet die Möglichkeit, mit Hilfe des beweglichen Befestigungselements zugleich die Befestigung und die Kontaktierung aufzuheben.

Ausführungsbeispiele der Erfindung werden im Folgenden anhand einer Zeichnung näher erklärt.

Es zeigen:
- FIG 1, 2, 3: eine erfindungsgemäße Schalteinrichtung im montierten und kontaktierten Zustand eines Schaltgeräts auf einem Träger,
- FIG 4: ein steckkontaktierbares Schaltgerät gemäß FIG 1, 2, 3
- FIG 5: eine perspektivische Ansicht eines Trägers der erfindungsgemäßen Schalteinrichtung in einer Zwischenstellung eines Schiebers zur Befestigung,
- FIG 6: eine perspektivische Ansicht des Trägers gemäß FIG 5 mit einer im montierten Zustand befindlichen Ruhelage des Schiebers,
- FIG 7: eine perspektivische Ansicht eines Trägers mit Schieber im nichtmontierten, d.h. ausgerücktem Zustand des Schaltgeräts,
- FIG 8, 9, 10: verschiedene Ansichten der erfindungsgemäßen Schalteinrichtung gemäß FIG 1, 2, 3 bei ausgerücktem Schaltgerät,
- FIG 11: eine erfindungsgemäße Schalteinrichtung mit einem im wesentlichen plattenförmigen Träger,
- FIG 12: eine Schalteinrichtung mit einer alternativen Ausführung zur Aufhebung der Kontaktierung,
- FIG 13: eine Schnittdarstellung eines Trägers mit integriertem beweglichen Befestigungsmittel in alternativer Ausführung,
- FIG 14: eine perspektivische Ansicht von mehreren auf einem Träger montierten Schaltgeräten und
- FIG 15: alternative Ausführung eines Schaltgeräts mit Träger zur Befestigung auf einer Hutschiene.

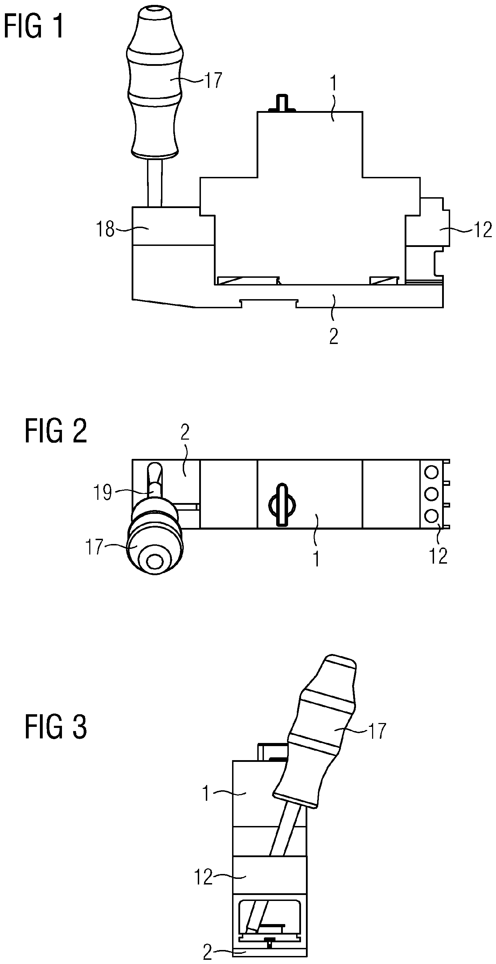

In FIG 1, 2, 3 ist eine Schalteinrichtung, die im Wesentlichen ein steckkontaktierbares Schaltgerät 1 und einen Träger 2 umfasst, im montierten und kontaktierten Zustand dargestellt. Der Träger 2 ist U-förmig ausgebildet und nimmt das Schaltgerät 1 in dem durch die U-Form gebildeten Zwischenraum auf, wobei das Schaltgerät 1 durch ein im Träger 2 integriertes bewegliches Befestigungsmittel befestigt ist.

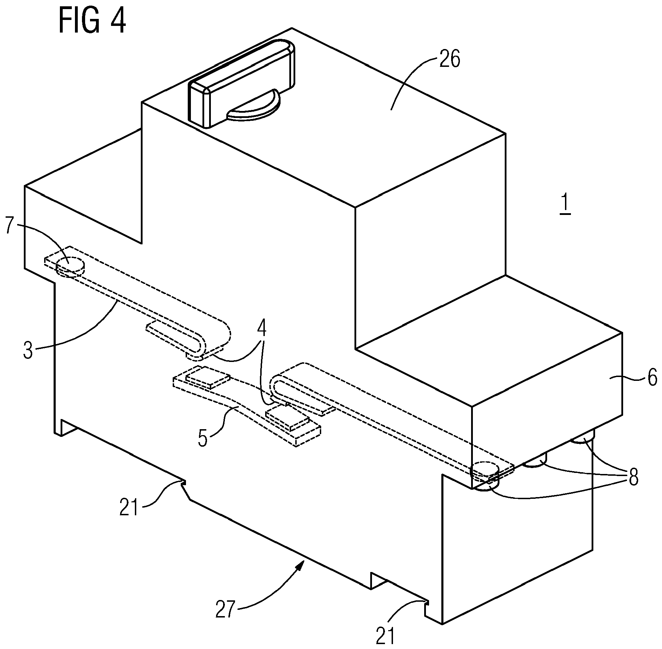

Das Schaltgerät 1 ist dreiphasig mit drei Hauptstrombahnen 3 ausgeführt, die jeweils mit einem Schaltelement versehen sind, wie beispielsweise in FIG 4 dargestellt. Das Schaltelement in der Hauptstrombahn 3 ist hier als Doppelunterbrechung mit zwei Festkontakten 4 und einer beweglichen Kontaktbrücke 5 ausgebildet, durch die der in der Hauptstrombahn 3 geführte Strom ein- und ausgeschaltet werden kann. Das Gehäuse 6 weist außenseitig zugängliche Steckkontakte auf, von denen erste Steckkontakte 7 zur Zuführung des Stroms in die Hauptstrombahn und zweite Steckkontakte 8 zur Weiterleitung des Stroms von der Hauptstrombahn 3 zu einem Verbraucher dienen. Die ersten und zweiten Steckkontakte sind hier als Kontaktstifte 7, 8 ausgebildet. Die Kontaktstifte 7, 8 sind senkrecht zur Rückwand 27 des Gehäuses 6 derart zugänglich, dass die Steckverbindung der Steckkontakte 7, 8 mit Gegensteckkontakten durch ein Ineinanderstecken im wesentlichen senkrecht zur Rückwand 27 möglich ist. Die Rückwand 27 ist dabei die Wand, die der Frontseite 26 gegenüberliegt und über die üblicherweise das Schaltgerät 1 befestigbar ist.

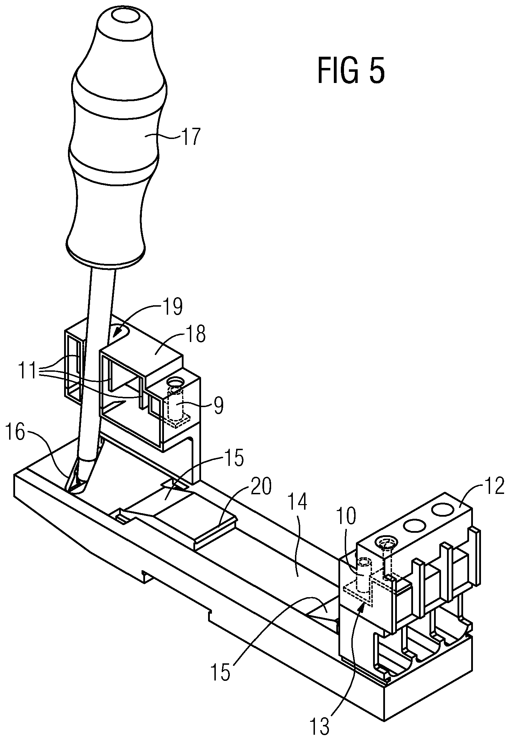

In den Schenkeln des Trägers 2 sind Gegensteckkontakte 9 und 10 zur Kontaktierung mit den Kontaktstiften 7, 8 angeordnet, wie es beispielsweise FIG 5 zeigt. Die Gegensteckkontakte 9 sind dabei mit in einem Schenkel isoliert geführten Stromschienen 11 zur Energieeinspeisung elektrisch verbunden. Der andere Schenkel weist ein abnehmbares Steckanschlussmodul 12 mit den Gegensteckkontakten 10 auf, die jeweils mit einer Schraubanschlussklemme 13 im Steckanschlussmodul 12 verbunden sind. Die Schraubanschlussklemmen 13 dienen zum Anschluss von Leitungen zur Stromzuführung an einen Verbraucher. Im Träger ist ein Schieber 14 als bewegliches Befestigungsmittel integriert, der federbelastet und mit zwei Ausrückflächen 15 versehen ist, die in Bezug auf die Bewegungsrichtung des Schiebers 14 einen Winkel kleiner 45° aufweisen. Weiterhin ist der Schieber 14 mit einer Betätigungsnut 16 zur Aufnahme eines Werkzeugs, insbesondere eines Schraubendrehers 17 versehen, über die eine Kraft auf den Schieber 14 zu seiner Verschiebung übertragbar ist. Die Ausrichtung der Betätigungsnut 16 weist eine quer zur Verschiebe- bzw. Bewegungsrichtung liegende Komponente auf. Der außerdem als Abstützungsteil 18 dienende Schenkel des Trägers 2 ist mit einer Durchgangsöffnung 19 versehen, die zur Abstützung des Schraubendrehers 17 dient. Nachdem der Schraubendreher 17 durch die Durchgangsöffnung 19 durchgesteckt ist und in die Betätigungsnut 16 eingreift, lässt sich mit ihm durch eine Hebelbewegung eine Kraft auf den Schieber 14 übertragen, die diesen quer zur Hebelbewegung verschiebt. Die Verschiebung des Schiebers 14 führt einerseits dazu, dass zwei am Schieber 14 angeformte Haken 20, die im montierten Zustand an einer Kontur 21 (s. FIG 4) an der Rückwand 27 des Gehäuses 6 eingreifen, das Schaltgerät 1 freigeben. Zugleich rücken die schrägen Ausrückflächen 15 des Schiebers 14 das Schaltgerät 1 senkrecht zur Verschieberichtung nach oben aus, wobei die Kontaktierung zwischen den Kontaktstiften 7, 8 und den Gegensteckkontakten 9, 10 aufgehoben wird.

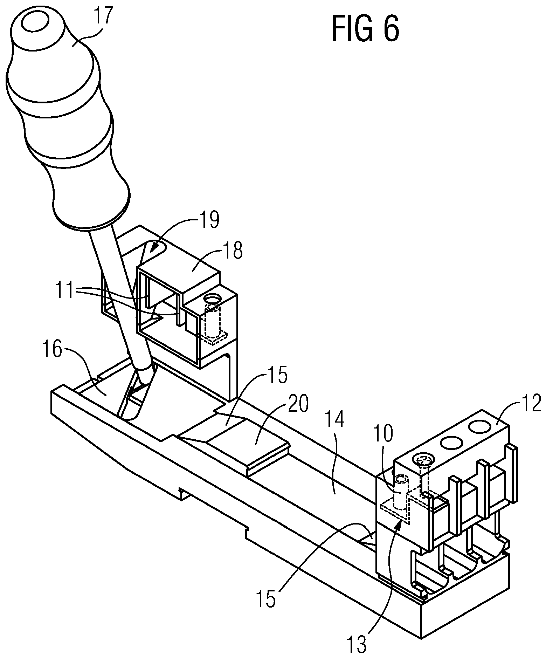

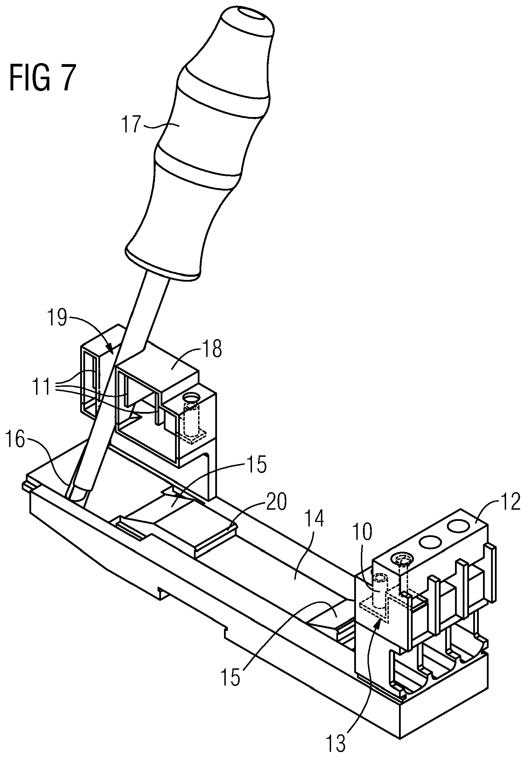

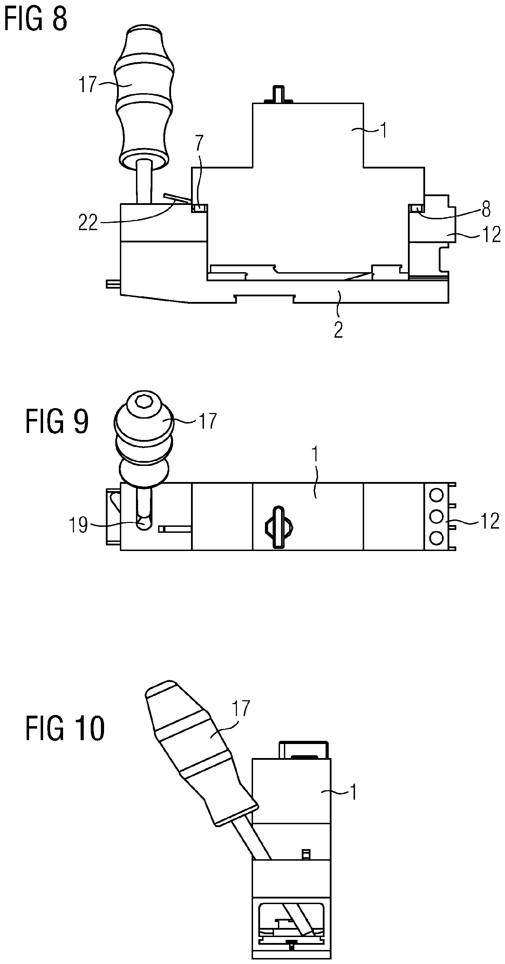

FIG 6, 5, 7 zeigen in der angegebenen Reihenfolge die Änderung der Lage des Schiebers 14 durch die Hebelkraft des Schraubendrehers 17, ausgehend von der Lage im montierten Zustand gemäß FIG 6 und der Lage im Endzustand bei ausgerücktem Schaltgerät 1 gemäß FIG 7. Die erfindungsgemäße Schalteinrichtung mit ausgerücktem Schaltgerät 1, d.h. nicht befestigten und nicht kontaktiertem Schaltgerät 1, ist in den FIG 8, 9 und 10 dargestellt. Die Schalteinrichtung ist mit einer Anzeige 22 des Kontaktierungszustands versehen.

Gemäß FIG 1, 2, 3 befindet sich der Schieber 14 in einer Vorzugslage, in der er das Schaltgerät 1 durch Kraft und/oder Formschluss mit diesem gegen ein Ausrücken sichert.

Im Folgenden werden alternative Ausführungsformen beschrieben.

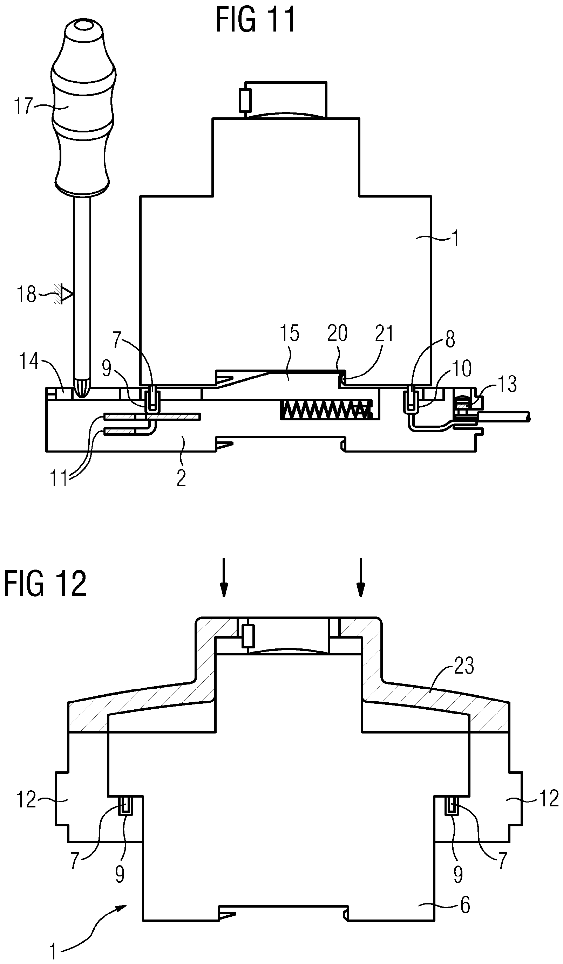

FIG 11 zeigt einen Träger 2 mit einem steckkontaktierten Schaltgerät 1. Diese Schalteinrichtung ist grundsätzlich gleich aufgebaut wie das oben beschriebene Ausführungsbeispiel, jedoch erfolgt hier die Kraftübertragung vom Schraubendreher 17 auf den Schieber 14 über ein abweichend ausgeführtes Abstützteil 18.

Bei der Ausführungsform gemäß FIG 12 ist das Schaltgerät 1, das auf eine Hutschiene aufschnappbar ist, mit zwei Steckanschlussmodulen 12 in der oben angegebenen Weise steckkontaktiert. Mittels eines Bügels 23, der am Gehäuse 6 anliegt und von diesem geführt wird, lässt sich eine Kraftübertragung auf die Steckanschlussmodule 12 und damit die Gegensteckkontakte 9, 10 erreichen, was zur Aufhebung des kontaktierten Zustands führt. Dies kann im befestigten Zustand des Schaltgeräts erfolgen.

Als Mittel zur Kraftübertragung auf das Schaltgerät, um die Kontaktierung von Steckkontakten mit Gegensteckkontakten aufzuheben, können auch Schraubenfedern dienen. Nach einem Entriegelungsvorgang, bei dem die Befestigung des Schaltgeräts im Träger aufgehoben wird, drücken die Schraubenfedern das Schaltgerät aus der kontaktierenden Position. Für den Entriegelungsvorgang sowie die gleichzeitige oder sich anschließende Aufhebung der Kontaktierung sind verschiene Lösungen möglich.

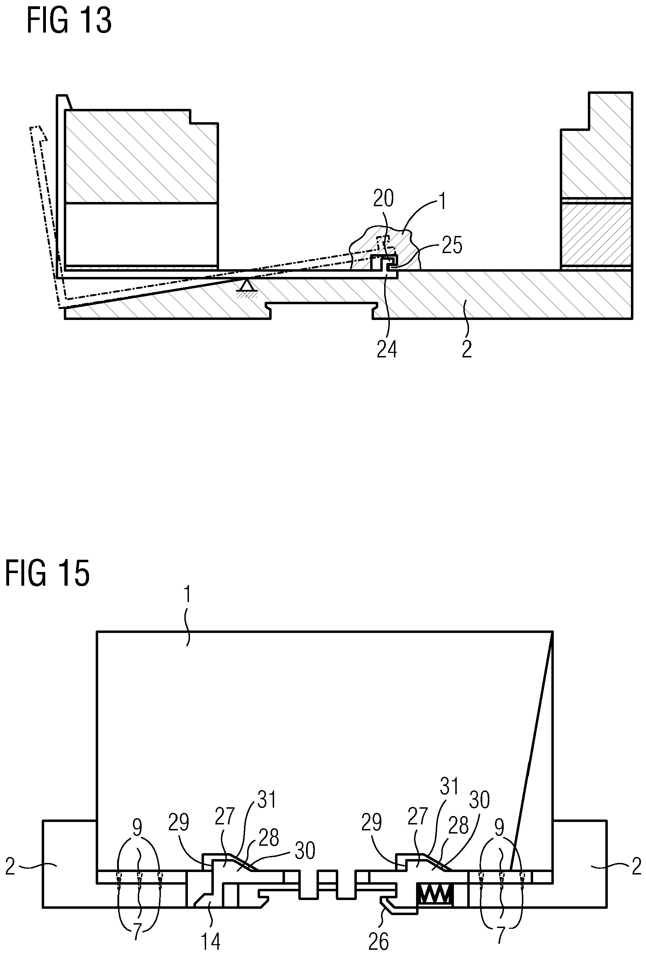

In FIG 13 ist eine Ausführungsform dargestellt, bei der abweichend von dem oben genannten Ausführungsbeispiel gemäß FIG 1 bis 10 das bewegliche Befestigungselement als ein verschwenkbarer Hebel 24 gezeigt ist. Der Hebel 24 ist mit einem Haken 20 zur Verrastung mit einem Vorsprung 25 des Schaltgeräts 1 versehen. Durch Verschwenken des Hebels 24 wird die Verrastung aufgehoben und das Schaltgerät 1 durch eine Kippbewegung ausgerückt.

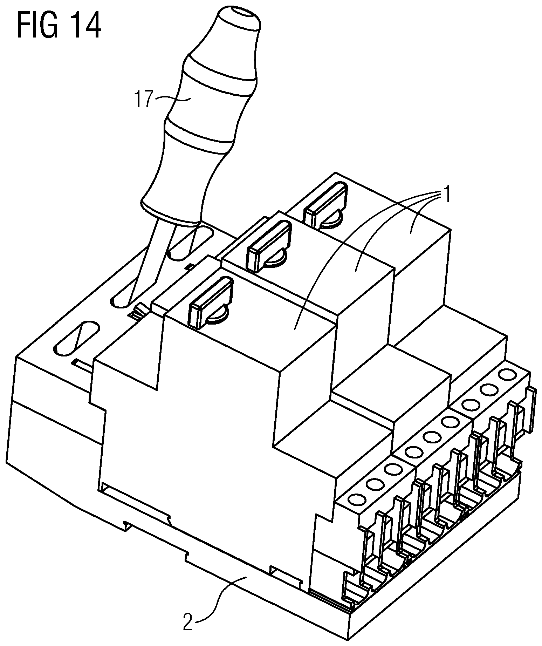

FIG 14 zeigt drei nebeneinander angeordnete steckkontaktierbare Schaltgeräte 1 auf einem gemeinsamen Träger 2 der oben beschriebenen Art, wobei die beiden äußeren Schaltgeräte 1 sich im montierten und kontaktierten Zustand befinden. Das mittlere Schaltgerät 1 befindet sich aufgrund der Betätigung mit dem Schraubendreher 17 im ausgerückten Zustand.

Im Ausführungsbeispiel gemäß FIG 15 ist ein Schaltgerät 1 mittels eines Schiebers 14 auf einem Träger 2 adaptiert. Die Schieber 14 ist im Träger 2 beweglich gelagert und wiest auf einer Seite einen Haken 28 zur Verrastung an einer Hutschiene auf, auf die auch der Träger 2 mit seinen Befestigungsmitteln aufschnappbar ist.

Zwei Vorsprünge 29 des Schiebers 14 ragen mit ihren schräg verlaufenden Ausrückflächen 30 in formähnlich angepasste Ausnehmungen 31 des Schaltgeräts 1 an seiner Unterseite hinein. Durch Verschieben ces Schiebers 14 erfolgt in einer ersten Phase des Verschiebevorgangs eine Entriegelung von der hier nicht dargestellten Hutschiene. In der zweiten Phase des Verschiebevorgangs wird über die schrägen Ausrückflächen 30 des Schiebers 14 das Schaltgerät 1 ausgerückt und dabei zugleich die Kontaktierung von Steckkontakten 7, 8 des Schaltgeräts 1 mit Gegensteckkontakten 9, 10 im Träger 2 aufgehoben.

## Patentansprüche

1. Schalteinrichtung mit folgenden Merkmalen:
a) mit mindestens einem Schaltgerät (1), das mindestens eine Hauptstrombahn (3) mit einem Schaltelement (4, 5) und ein Gehäuse (6) mit außenseitig zugänglichen, senkrecht zur Rückwand (27) des Gehäuses (6) steckbaren Steckkontakten (7, 8) aufweist, von denen mindestens ein erster (7) zur Zuführung des Stroms in die Hauptstrombahn dient und mindestens ein zweiter Steckkontakt (8) zur Weiterleitung des Stroms von der Hauptstrombahn (3) zu einem Verbaucher dient,
b) mit Gegensteckkontakten (9, 10) zur Kontaktierung mit den ersten (7) und/oder zweiten Steckkontakten (8),
c) mit Mitteln (14, 23) zur Kraftübertragung auf das Schaltgerät (1) oder auf die Gegensteckkontakte (9, 10), die zur Aufhebung einer Kontaktierung von ersten (7) und/oder zweiten Steckkontakten (8) mit den Gegensteckkontakten (9, 10) dienen,
**dadurch gekennzeichnet, dass** ein bewegliches Befestigungselement (14) an einem Träger (2) vorgesehen ist, das zur Befestigung des Schaltgeräts (1) dient, wozu das bewegliche Befestigungsmittel (14) an mindestens einer Kontur (21) des Schaltgeräts (1) eingreift, wobei das bewegliche Befestigungsmittel als Schieber (14) ausgeführt ist.

2. Schalteinrichtung nach Anspruch 1,
**dadurch gekennzeichnet, dass** eine Vorzugslage des beweglichen Befestigungselements (14) zur Sicherung des Schaltgeräts (1) durch Kraft- und/oder Formschluss mit diesem gegen ein Ausrücken vorgesehen ist.

3. Schalteinrichtung nach einem der Ansprüche 1 oder 2,
**dadurch gekennzeichnet, dass** das bewegliche Befestigungselement (14) über mindestens eine Kante oder Ausrückfläche (15) verfügt, über die das Schaltgerät (1) durch eine Bewegung des Befestigungselements (14) ausrückbar ist.

4. Schalteinrichtung nach einem der Ansprüche 1 bis 3,
**dadurch gekennzeichnet, dass** das bewegliche Befestigungselement (14) als Mittel zur Kraftübertragung auf das Schaltgerät (1) oder die Gegensteckkontakte (9, 10) dient, das zur Aufhebung einer Kontaktierung von den ersten (7) und/oder zweiten Steckkontakten (8) mit Gegensteckkontakten (9, 10) dient.

5. Schalteinrichtung nach einem der vorhergehenden Ansprüche,
**dadurch gekennzeichnet, dass** die Ausrückfläche (15) des Schiebers (14) in Bezug auf seine Bewegungsrichtung einen Winkel aufweist, der kleiner als 45° ist.

6. Schalteinrichtung nach einem der vorhergehenden Ansprüche,
**dadurch gekennzeichnet, dass** der Schieber (14) eine Betätigungsnut (16) zur Aufnahme eines Werkzeugs (17) aufweist, womit eine Kraft auf den Schieber (14) zu seiner Verschiebung übertragbar ist.

7. Schalteinrichtung nach Anspruch 6, **dadurch gekennzeichnet, dass** die Ausrichtung der Betätigungsnut (16) eine quer zur Verschieberichtung liegende Komponente aufweist.

8. Schalteinrichtung nach einem der Ansprüche 6 oder 7, **gekennzeichnet durch** ein Abstützungsteil (18) mit einer Durchgangsöffnung (19), die zur Abstützung des Werkzeugs (17) dient, mit dem mit einer Hebelbewegung des in die Betätigungsnut (16) eingreifenden Werkzeugs (17) eine Kraft auf den Schieber (14) übertragbar ist.

## Claims

1. Switching device having the following features:
a) comprising at least one switchgear unit (1), which has at least one main current path (3) with a switching element (4, 5) and a housing (6) with plug contacts (7, 8), which are accessible from the outside, can be plugged at right angles to the rear wall (27) of the housing (6) and of which at least one first plug contact (7) is used for feeding the current into the main current path and at least one second plug contact (8) is used for passing the current on from the main current path (3) to a load,
b) comprising mating plug contacts (9, 10) for making contact with the first plug contacts (7) and/or the second plug contacts (8), and
c) comprising means (14, 23) for transmitting force onto the switchgear unit (1) or onto the mating plug contacts (9, 10), which are used for eliminating a contact connection between the first plug contacts (7) and/or second plug contacts (8) and the mating plug contacts (9, 10), **characterized in that** a movable fixing element (14) on a mount (2) is provided which is used for fixing the switchgear unit (1), for which purpose the movable fixing means (14) engages at at least one contour (21) of the switchgear unit (1), wherein the movable fixing means is in the form of a slide (14).

2. Switching device according to Claim 1, **characterized in that** a preferred position for the movable fixing element (14) is provided for the purpose of securing the switchgear unit (1) against becoming disengaged owing to a force-fitting and/or interlocking connection with it.

3. Switching device according to one of Claims 1 and 2, **characterized in that** the movable fixing element (14) has at least one edge or disengaging face (15), via which the switchgear unit (1) can be disengaged owing to a movement of the fixing element (14).

4. Switching device according to one of Claims 1 to 3, **characterized in that** the movable fixing element (14) is used as means for transmitting force onto the switchgear unit (1) or the mating plug contacts (9, 10), which is used for eliminating a contact connection between the first plug contacts (7) and/or second plug contacts (8) and mating plug contacts (9, 10).

5. Switching device according to one of the preceding claims, **characterized in that** the disengaging face (15) of the slide (14) is at an angle of less than 45° with respect to its movement direction.

6. Switching device according to one of the preceding claims, **characterized in that** the slide (14) has an actuating groove (16) for accommodating a tool (17), whereby a force can be transmitted onto the slide (14) in order to displace it.

7. Switching device according to Claim 6, **characterized in that** the alignment of the actuating groove (16) has a component which is transverse with respect to the displacement direction.

8. Switching device according to one of Claims 6 and 7, **characterized by** a supporting part (18) having a through-opening (19), which is used for supporting the tool (17) with which a force can be transmitted onto the slide (14) with a lever movement of the tool (17) engaging in the actuating groove (16).

## Revendications

1. Dispositif de commutation présentant les caractéristiques suivantes :
a) au moins un appareil de commutation (1) qui présente au moins un circuit principal (3) avec un élément de commutation (4,5) et un boîtier (6) avec des contacts mâles (7, 8) enfichables verticalement par rapport à la paroi arrière (27) du boîtier (6) et dont au moins un premier (7) sert à amener l'électricité dans le circuit principal et au moins un deuxième contact mâle (8) sert à réacheminer l'électricité du circuit principal (3) vers un consommateur ;
b) des contacts femelles (9, 10) pour établir le contact avec le premier contact mâle (7) et/ou le deuxième contact mâle (8) ;
c) des moyens (14, 23) pour transmettre la force à l'appareil de commutation (1) ou aux contacts femelles (9, 10) qui servent à annuler un contact entre le premier contact mâle (7) et/ou le deuxième contact mâle (8) et les contacts femelles (9, 10),
**caractérisé en ce qu'**est prévu, sur un support (2), un élément de fixation mobile (14) qui sert à fixer l'appareil de commutation, ce pour quoi le moyen de fixation mobile (14) s'engage sur au moins un contour (21) de l'appareil de commutation (1), le moyen de fixation mobile étant réalisé sous la forme d'un curseur (14).

2. Dispositif de commutation selon la revendication 1, **caractérisé en ce qu'**une position préférentielle de l'élément de fixation mobile (14) est prévue pour bloquer l'appareil de commutation (1) par liaison par force et/ou par complémentarité de forme avec celui-ci pour l'empêcher de se détacher.

3. Dispositif de commutation selon l'une des revendications 1 ou 2, **caractérisé en ce que** l'élément de fixation mobile (14) dispose d'au moins un bord ou surface de détachement (15) par l'intermédiaire duquel/de laquelle l'appareil de commutation (1) peut se détacher grâce à un mouvement de l'élément de fixation (14).

4. Dispositif de commutation selon l'une des revendications 1 à 3, **caractérisé en ce que** l'élément de fixation mobile (14) sert de moyen de transmission de force à l'appareil de commutation (1) ou aux contacts femelles (9, 10) qui sert à annuler un contact entre le premier contact mâle (7) et/ou le deuxième contact mâle (8) et les contacts femelles (9, 10).

5. Dispositif de commutation selon l'une des revendications précédentes, **caractérisé en ce que** la surface de détachement (15) du curseur (14) forme avec son sens de mouvement un angle inférieur à 45°.

6. Dispositif de commutation selon l'une des revendications précédentes, **caractérisé en ce que** le curseur (14) présente une rainure d'actionnement (16) pour loger un outil (17), cela permettant la transmission d'une force au curseur (14) afin de le déplacer.

7. Dispositif de commutation selon la revendication 6, **caractérisé en ce que** l'orientation de la rainure d'actionnement (16) présente une composante transversale au sens de déplacement.

8. Dispositif de commutation selon l'une des revendications 6 ou 7, **caractérisé par** une pièce d'appui (18) avec un orifice de passage (19) servant à l'appui de l'outil (17) qui permet la transmission d'une force au curseur (14) par un mouvement de levier de l'outil (17) qui s'engage dans la rainure d'actionnement (16).
